Europäisches Patentamt

European Patent Office

Office européen des brevets

(11) Veröffentlichungsnummer: **0 482 469 B1**

## EUROPÄISCHE PATENTSCHRIFT

(45) Veröffentlichungstag der Patentschrift: **27.12.95**

(51) Int. Cl.6: **G01K 17/00**, G01N 25/48

(21) Anmeldenummer: **91117521.4**

(22) Anmeldetag: **14.10.91**

(54) **Verfahren und Vorrichtung zur Messung der Wärmeproduktionsrate in einem Reaktor mittels eines Kalorimeters**

(30) Priorität: **26.10.90 DE 4034115**

(43) Veröffentlichungstag der Anmeldung:
**29.04.92 Patentblatt 92/18**

(45) Bekanntmachung des Hinweises auf die
Patenterteilung:
**27.12.95 Patentblatt 95/52**

(84) Benannte Vertragsstaaten:
**BE DE ES IT**

(56) Entgegenhaltungen:
**DE-A- 3 049 105**
**US-A- 4 892 707**

(73) Patentinhaber: **BAYER AG**

**D-51368 Leverkusen (DE)**

(72) Erfinder: **Litz, Wilfried, Dr.**
**Wodanstrasse 60**
**W-5000 Köln 91 (DE)**
Erfinder: **Schmidt, Adolf, Dr.**
**Roggendorfstrasse 67**
**W-5000 Köln 80 (DE)**
Erfinder: **Pallaske, Ulrich, Dr.**
**Haferkamp 4**
**W-5000 Köln 80 (DE)**
Erfinder: **Rose, Reinhold**
**An der Kante 27**
**W-5090 Leverkusen (DE)**

**Beschreibung**

Die Erfindung betrifft ein Verfahren zur Messung der Wärmeproduktionsrate in einem Reaktor mittels eines Kalorimeters, das aus Meßkammer, Zwischenthermostat und Sockelthermostat besteht, und unter Zugrundelegung der Wärmebilanzgleichung der Meßkammer sowie der Wärmebilanzgleichung des Zwischenthermostaten.

Weiter betrifft die Erfindung ein Kalorimeter zur Durchführung des oben genannten Verfahrens, bestehend aus einer Meßkammer, die mindestens einen Temperaturfühler, eine regelbare Heizung mit einer Leistungsmeßschaltung und ein Rührwerk aufweist, einem Zwischenthermostaten, der mindestens einen Temperaturfühler und eine regelbare Heizeinrichtung mit einer Leistungsmeßschaltung aufweist, und einem Sockelthermostaten, wobei die regelbare Heizung eine konstante Temperaturdifferenz $\Delta T_1$ zwischen dem Sockel und dem Zwischenthermostaten aufrechterhält.

Das technische Gebiet der Erfindung ist im weitesten Sinne die Prozeßleittechnik (PLT). Die Steuerung großer Produktionsreaktoren durch moderne Methoden geschieht häufig durch die sogenannte modellgestützte Prozeßführung. Dabei werden aus einem System von Zustandsgrößen (Temperatur, Druck, Konzentrationen etc.) die unbekannten Zustandsgrößen durch Bestimmung der übrigen und durch die Anwendung von mathematischen Methoden, wie dem Kalman-Filter bzw. dem Luenberger-Beobachter, bestimmt. Die Meßgröße, die diesem modellgestützten Meßverfahren bei chemischen Prozeßen problemlos zur Verfügung gestellt werden kann, ist die Temperatur. Andere Zustandsgrößen, wie Druck, Konzentrationen etc., sind oft nur schwer meßbar oder weisen erhebliche Zeitverschiebungen in der Registrierung auf. Eine weitere, analytisch äußerst aussageträchtige Meßgröße ist die Geschwindigkeit der Enthalpieänderung (Wärmeproduktionsrate) eines chemischen Prozesses, da jede chemische Elementar-Reaktion mit einer mehr oder weniger großen Enthalpieänderung gekoppelt ist.

Die Schwierigkeiten bei der Messung der Wärmeproduktionsrate in einem Produktionsreaktor, d.h. eines Reaktors, der zumeist einen Inhalt von ungefähr 100 l bis zu mehreren Kubikmetern aufweisen kann, sind beträchtlich. Ein solches System läßt sich nur schwer von Umwelteinflüssen isolieren. Es ist bekannt, daß die Temperatur in einem solchen Produktionsreaktor ständig etwas schwankt, daß der Eintrag von Rührleistung durch vorhandene Rührwerke in die Reaktionsmasse und die Wärmeverluste nur schwer genau zu bestimmen ist.

Weiter verändert sich im Normalfall auch die effektive Wärmekapazität der Reaktorfüllung im Laufe der Reaktion ständig und die Wärmedurchlässigkeit der Reaktorwände wird ebenfalls durch Anlagerung von Reaktionsmasse, dem sogenannten "fouling", beeinflußt.

Aufgrund dieser Schwierigkeiten werden zur Messung kalorimetrischer Größen häufig Probereaktoren mit einem Volumen zwischen 0,1 und 15 l eingesetzt, deren Wärmebilanz besser zu kontrollieren ist. Eine Übertragung der so gewonnenen Größen auf Produktionsreaktoren des oben genannten Volumens ist jedoch aufgrund des veränderten Volumen/Oberflächen-Verhältnisses und der in einem Großreaktor nicht exakt einzuhaltenden Prozeßführungsgrößen stets mit Unsicherheiten behaftet. Es besteht daher ein Bedürfnis, die Zustandsgrößen möglichst im Produktionsreaktor selbst, also on line, zu bestimmen.

Ein solches Verfahren ist beispielsweise im Chem. Eng. Progress 81,9 (1985), Seite 57/61 beschrieben. Dieses bekannte Verfahren basiert auf den Masse- bzw. Wärmebilanzgleichungen des eigentlichen Produktionsreaktors und einer ihn umgebenen, kühlmitteldurchflossenen Hülle (jacket). Das bekannte Verfahren weist neben der Zugrundelegung einer unvollständigen Wärmebilanzgleichung auch den Nachteil auf, daß eine Veränderung der effektiven Wärmekapazität und der Dichte der Reaktorfüllung nur grob berücksichtigt wird.

Es bestand daher die Aufgabe, ein verbessertes Verfahren zur Bestimmung der Wärmeproduktionsrate in einem Reaktor zu entwickeln.

Die Aufgabe wird dadurch gelöst, daß die Zusammensetzung der Stoffmenge in der Meßkammer des Kalorimeters ständig der Zusammensetzung der Stoffmenge im Reaktor angeglichen wird ($q_{Mi} = 0$ und $c_2 = c_3$) und die Temperatur der Stoffmenge in der Meßkammer ständig der Temperatur der Stoffmenge im Reaktor angeglichen wird ($m \cdot c_3 \cdot T_3 - m \cdot c_2 \cdot T_2$) = 0 und der Stofftransport vom Reaktor in die Meßkammer zur Bestimmung der effektiven Wärmekapazität der Meßkammerfüllung $C_2$ unter Zugrundelegung der dann geltenden Wärmebilanz $C_2 \cdot dT_2/dt = q_{Re} + q_{Rü2} - KF_{21} \cdot (T_2 - T_1)$ für ein Zeitintervall $\delta t$ unterbrochen wird und nach Bestimmung der Wärmeproduktionsrate $q_{Re}$ in der Meßkammer unter Berücksichtigung des Volumen- oder Masseverhältnisses zwischen Reaktor- und Meßkammerfüllung die Wärmeproduktionsrate des Reaktors bestimmt wird.

Der Hauptvorteil des neuen Verfahrens besteht darin, daß die Wärmeproduktionsrate parallel zum Betriebszustand des Produktionsreaktors gemessen wird, jedoch räumlich getrennt von diesem in einer leichter, kalorisch genauer zu bilanzierenden Meßzelle. Die Wärmeproduktionsrate wird umso genauer bestimmt, je besser die Zusammensetzung der Meßkammerfüllung und ihre Temperatur den Verhältnissen des Produktionsreaktors angeglichen ist.

Ein weiterer Vorteil des neuen Verfahrens besteht in der Bestimmung der effektiven Wärmekapazität $C_2$ der Meßkammerfüllung, die in den meisten Fällen aufgrund der chemischen Umsetzung ständiger Änderung unterworfen ist.

Eine bevorzugte Variante des neuen Verfahrens ist dadurch gekennzeichnet, daß zur Bestimmung der effektiven Wärmekapazität $C_2$ der Meßkammerfüllung die Temperaturen $T_2$ und $T_1$ in dem Zeitintervall $\delta t$ gemessen, $C_2$ und $KF_{21}$ darin als konstant angenommen und $q_{Re} + q_{Rü2}$ für das Zeitintervall $\delta t$ durch eine mittlere Wärmeproduktionsrate $q_m$ ersetzt werden.

Dieses Verfahren besitzt den Vorteil, die Auswertung des Verfahrens zu vereinfachen. Dies gilt insbesondere dann, wenn die Aktivierungsenergie der Reaktionen bekannt ist.

Eine weitere, bevorzugte Variante des neuen Verfahrens ist dadurch gekennzeichnet, daß zur Bestimmung der effektiven Wärmekapazität $C_2$ die unbekannten Parameter $C_2$ und $q_{Re}$ in der zugrundeliegenden Wärmebilanz

$$C_2 \cdot dT_2/dt = q_{Re} + q_{Rü2} - KF_{21} \cdot (T_2 - T_1)$$

durch Messung von $T_2$ und $T_1$ während des Zeitintervalls $\delta t$ und durch die Anwendung an sich bekannter mathematischer Verfahren bestimmt werden.

Diese Variante des Verfahrens besitzt den Vorteil, daß sich die effektive Wärmekapazität und die Wärmeproduktionsrate in der Meßkammer simultan bestimmen lassen, ohne daß eine genaue Kenntnis der ablaufenden Reaktion notwendig ist. Nach Bestimmung von $KF_{21}$ und $q_{Rü2}$, wie unten beschrieben, und der Messung von $T_2$ und $T_1$ sind nur $C_2$ und $q_{Re}$ nicht der direkten Messung zugänglich. Diese beiden Größen werden durch Parameteranpassung ("fitting") an den gemessenen Temperaturverlauf rechnerisch ermittelt. Zu verwenden sind dazu bekannte Verfahren, wie beispielsweise der Kalman-Bucy-Filter.

Wird die Größe $dT_2/dt$ durch numerische Differentiation ermittelt, so ist auch eine lineare Regression anwendbar.

Eine besonders bevorzugte Variante des neuen Verfahrens ist dadurch gekennzeichnet, daß die Temperatur des Stoffgemisches beim Eintritt in die Meßkammer durch Heizen - respektive Kühlen - der Verbindungsleitung zwischen Reaktor und Meßkammer gleich der Temperatur des Stoffgemisches im Reaktor gehalten wird.

Diese Variante besitzt den Vorteil, daß ein Wärmeverlust oder eine Wärmeaufnahme des Stoffgemisches in den Leitungen vom Reaktor zur Meßkammer besser kompensiert werden können. Da die Störungen im Energiegehalt des Stoffgemisches, wie sie beispielsweise durch das Pumpen oder durch den Wärmetransport durch die Leitungswandung verursacht werden, nur schwer zu erfassen sind, erweist es sich als vorteilhaft, diese Störungen bereits in den Zuleitungen selbst auszugleichen. Damit wird vermieden, weitere Terme in die Wärmebilanzgleichung der Meßkammer aufnehmen zu müssen.

Das Kalorimeter zur Durchführung des neuen Verfahrens stellt eine Weiterentwicklung des durch die deutsche Offenlegungsschrift DE-30 49 105-A1 bekannten Reaktorkalorimeters dar. Dieses ist ein geschlossenes System. Das bekannte Kalorimeter läßt sich nur im Batchverfahren unter isothermen Bedingungen betreiben. Es ist daher nur möglich, die Wärmeproduktionsrate einer zu Reaktionsbeginn vorgelegten Reaktionsmischung bei konstanter Temperatur während des Reaktionsablaufes zu bestimmen.

Das neue Kalorimeter ist dadurch gekennzeichnet, daß es mindestens eine Verbindung zum Stofftransport vom Reaktor in die Meßkammer des Kalorimeters und eine Meß- und Regelschaltung aufweist, die die Temperatur in der Meßkammer der Temperatur im Reaktor anpaßt.

Erst durch die ständige Anpassung der stofflichen Zusammensetzung und der Temperatur läßt sich das Kalorimeter als on line-Sensor für die Wärmeproduktionsrate in einem größeren Reaktor verwenden.

Eine besonders bevorzugte Variante des neuen Kalorimeters ist dadurch gekennzeichnet, daß das Kalorimeter eine Verbindung mit einer Pumpeinrichtung zum kreisenden Stofftransport zwischen Reaktor und Meßkammer aufweist.

Solange das Meßkammervolumen klein gegenüber dem Inhalt des Produktionsreaktors ist und somit der Materialverlust in einem wirtschaftlich vertretbaren Rahmen gehalten werden kann, ist es denkbar, den Sensor auch ohne Rückführung des Stoffgemisches in den Reaktor zu betreiben. Die bevorzugte Variante besitzt jedoch den Vorteil, daß kein Materialverlust auftritt. Damit der Einfluß der anfänglichen Meßkammerfüllung auf den Reaktor jedoch klein bleibt und sich das Kalorimeter noch verhältnismäßig einfach von der Umgebung isolieren läßt, ist es vorteilhaft, die Größe der Meßkammer auch beim kreisenden Stofftransport nach oben zu begrenzen. So sollte die Stoffmenge in der Meßkammer höchstens 1/10 der Stoffmenge im Reaktor betragen. Um Verfälschungen der Reaktorfüllung vorzubeugen, ist jedoch ein Mengenverhältnis von

EP 0 482 469 B1

weniger als 1/100 vorzuziehen. Nimmt man übliche Produktionsreaktoren als Maßstab, so bedeutet dies, daß das Volumen der Meßkammer unter 10 l, bevorzugt jedoch unter 1,5 l, liegt. Die untere Grenze für das Volumen der Meßkammer ist begrenzt durch die Größe der Wärmeproduktionsrate und der Notwendigkeit, diese noch deutlich von möglichen Störeinflüssen getrennt zu bestimmen. In Kenntnis der üblichen Wärmeproduktionsraten bei Polymerreaktionen ist eine Messung mit einem Meßkammervolumen von mehr als 10 cm$^3$ denkbar. Um bessere Meßgenauigkeiten zu erreichen, beträgt das Volumen der Meßkammer jedoch bevorzugt mehr als 100 cm$^3$.

Eine weitere, bevorzugte Ausführungsform der neuen Vorrichtung ist dadurch gekennzeichnet, daß die Eintrittsstelle der Verbindung in die Meßkammer einen Temperaturfühler und die Verbindung eine regelbare Heizung mit einer Steuereinheit aufweisen, die die Eintrittstemperatur des aus dem Reaktor stammenden Stoffgemisches in die Meßkammer auf die im Reaktor herrschende Temperatur einstellen. Durch die Ausrüstung der Verbindungsstrecke von Reaktor zur Meßkammer mit einer regelbaren Heiz/Kühlvorrichtung wird erreicht, daß das Stoffgemisch beim Eintritt in die Meßkammer die gleiche Temperatur aufweist, die es im Reaktor besitzt. Auf diese weise wird die Messung der Wärmeproduktionsrate nicht durch die Pumpleistung der Pumpeinrichtung und/oder durch den Wärmeverlust durch die Leitungswände verfälscht.

Im folgenden wird das neue Verfahren und das Kalorimeter unter Bezugnahme auf eine Zeichnung näher erläutert.

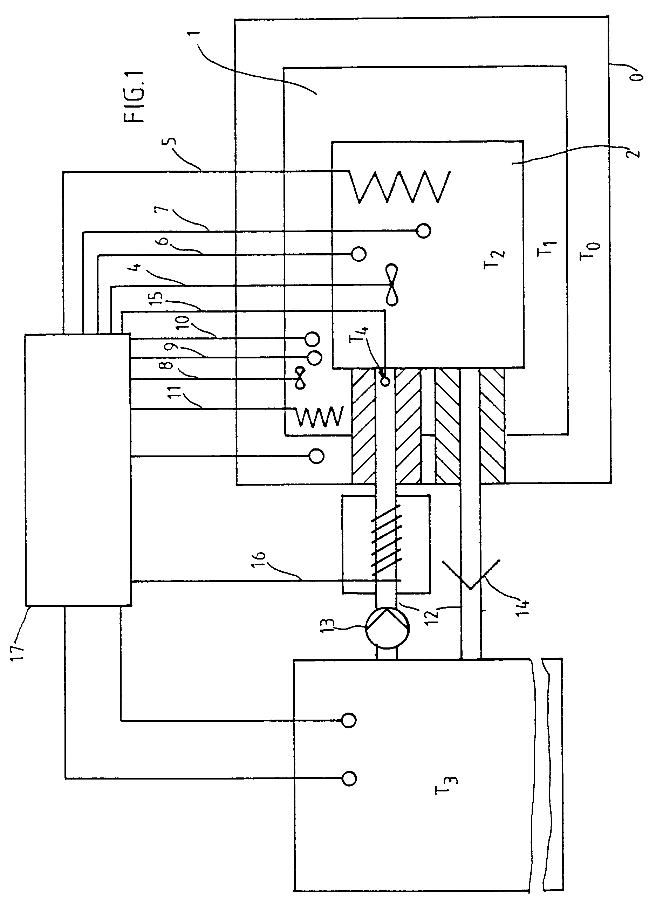

Fig. 1      zeigt das Schema des Kalorimeter-Sensors in Verbindung mit einem Reaktor,

Fig. 2      zeigt die grafische Darstellung der vorgelegten Werte für die Simulation der Temperaturschwankungen des Reaktors (gepunktete Linie (20)) und der Wärmeproduktionsrate einer Reaktion (21),

Fig. 3      zeigt den Temperaturverlauf für den Reaktor (+ - Linie) und die Meßkammer des Sensors (durchgehende Linie) während der ersten Stunde der Reaktion,

Fig. 4      zeigt den Vergleich zwischen der vorgegebenen Wärmeproduktionsrate des Reaktors ($q_{Re}$) und der mit dem neuen Verfahren bestimmten Wärmeproduktionsrate bei bekannter Aktivierungsenergie E der Reaktion (a),

Fig. 5      dito bei unbekannter Aktivierungsenergie E der Reaktion,

Fig. 6      gibt den Vergleich von gemessener Heizleistung $L_2$ in der Meßkammer mit der unter Zugrundelegung der geltenden Wärmebilanzgleichung berechneten Größe $L_b$ sowie die Gesamtleistung L des Sensors mit der Schwankungsamplitude $\Delta L_o$ eines Testsystems wieder,

Fig. 7      gibt den Verlauf der im Testsystem simulierten Wärmeproduktionsrate $q_{Re}$ und der gemessenen Gesamtleistung L bei konstanter Reaktortemperatur $T_3$ wieder.

Der Sensor besteht aus einer Meßkammer 2, die sich in einem Thermostaten (Zwischenthermostat) 1 befindet, der seinerseits von einem Sockelthermostaten 0 umgeben ist. Die Meßkammer 2 ist mit Rührer 4, Strombrechern, einem geregelten elektrischen Heizelement 5 und zwei Temperaturfühlern 6, 7 bestückt. Der Zwischenthermostat 1 ist ebenfalls mit einem Rührer 8, zwei Temperaturfühlern 9, 10 und einem Heizelement 11 ausgerüstet. Weiter weist der Sensor zwei Leitungen 12 zum Stofftransport zwischen Meßkammer 2 und einem Produktionsreaktor 3 auf. Der Leitung 12 sind eine Pumpeinrichtung 13, eine regelbare Absperreinrichtung 14, ein Temperaturfühler 15 und eine Heizung 16 zugeordnet. Die Steuer- und Regelleitungen laufen in einem Steuerungselement 17 zusammen.

Die Meßkammer 2 ist ideal durchmischt. Sie wird von dem Nebenstrom des Produktionsreaktors 3 durchströmt.

Die Temperaturen, die in den verschiedenen Elementen des Kalorimeter-Sensors herrschen, werden wie folgt bezeichnet:

Die Temperatur des Sockelthermostaten 0 wird mit $T_0$ bezeichnet, die Temperatur des Zwischenthermostaten 1 mit $T_1$ und die Temperatur der Meßkammer 2 mit $T_2$. Weiter wird die Temperatur des Reaktors 3 mit $T_3$ bezeichnet und die Temperatur am Ausgang der Zuleitung 12 vom Reaktor 3 in die Meßkammer 2 mit $T_4$. Die Temperatur $T_3$ des Reaktors 3 ist dabei durch die äußeren Umstände vorgegeben und die Temperatur $T_0$ des Sockelthermostaten 0 wird passend gewählt und durch die Regeleinheit 17 konstant gehalten.

Die Regeleinheit hält ein Temperaturgefälle zwischen den Thermostaten des Sensors aufrecht ($T_o < T_1 < T_2 = T_3 = T_4$). Mit der doppelten Auslegung der Temperaturfühler lassen sich auf einfache Weise neben den Absolutwerten auch die relevanten Temperaturdifferenzen bestimmen.

Für die Meßkammer 2 lautet die Wärmebilanz allgemein

$$C_2 \bullet dT_2/dt = q_{Re} + q_{Mi} + q_{Rü2} + L_2 + m.c_3.T_3 - m.c_2.T_2 - KF_{21} \bullet (T_2 - T_1)$$

4

mit

| | |
|---|---|
| $C_2$ | effektive Wärmekapazität der Meßkammerfüllung, |
| $q_{Re}$ | Wärmeproduktionsrate durch Reaktion in der Meßkammer, |
| $q_{Mi}$ | Wärmeproduktionsrate durch Mischen in der Meßkammer, |
| $q_{Rü2}$ | Wärmeproduktionsrate durch Rühren in der Meßkammer, |
| $L_2$ | elektrische Heizleistung in der Meßkammer, |
| $m$ | Massenstrom durch die Meßkammer, |
| $c_3$ | spezifische Wärme der Zuflußmasse (Produktionsreaktor), |
| $c_2$ | spezifische Wärme der Abflußmasse (Meßkammer), |
| $T_3$ | Temperatur des Produktionsreaktors, |
| $T_2$ | Temperatur der Meßkammer, |
| $T_1$ | Temperatur des Zwischenthermostaten, |
| $KF_{21}$ | Wärmedurchlässigkeit der Meßkammer zum Zwischenthermostat. |

Durch die stetig geregelte Heizleistung $L_1$ im Zwischenthermostaten 1 wird eine gewählte Temperaturdifferenz $\Delta T_1 = T_1 - T_0$ zwischen Sockelthermostat 0 und Zwischenthermostat 1 konstant aufrechterhalten, Die Heizleistung $L_2$ in der Meßkammer 2 wird so geregelt, daß die Temperatur in der Meßkammer 2 der Temperatur im Produktionsreaktor 3 entspricht: $T_2 = T_3$. Die Temperaturdifferenz zwischen Meßkammer 2 und Zwischenthermostaten 1 ist also im allgemeinen nicht konstant:

$$T_2 - T_1 = \Delta T_2 (t)$$

Nach Start der Regelung und Einstellung des Regelgleichgewichts entspricht in jedem Moment die Temperatur der Meßkammer 2 der Temperatur des Produktionsreaktors 3, d.h. es gilt

$$T_3 = T_2 = f(t) \text{ und } dT_3/dt = dT_2/dt = g(t).$$

Dadurch vereinfacht sich die Wärmebilanz zu

$$C_2 \cdot g = q_{Re} + q_{Mi} + q_{Rü2} + (c_3 - c_2).m.f + L_2 - KF_{21} \cdot (f - T_1).$$

Nach Einstellung des quasi stationären Zustands entspricht die Zusammensetzung der Reaktionsmasse in der Meßkammer 2 der des Reaktors 3. Folglich tritt dann keine Mischwärme mehr auf ($q_{Mi} = 0$) und die Differenz der spezifischen Wärmen $c_3$ und $c_2$ wird Null.

Damit ergibt sich

$$q_{Re}(t) = [C_2(t) \cdot g(t) + KF_{21}(t) \cdot (f(t) - T_1) - q_{Rü2}(t)] - L_2(t)$$
$$= L_b(t) - L_2 (t)$$

Der Klammerausdruck $L_b(t)$ stellt die Heizleistung dar, die notwendig ist, um Gleichheit von Meßkammertemperatur $T_2$ und Produktionsreaktortemperatur $T_3$ herzustellen, wenn keine Wärmeproduktion durch Reaktion in der Meßkammer stattfindet ($q_{Re} = 0$). Ist $f(t)$ konstant und damit $g(t)$ gleich Null, kann sich trotzdem $L_b(t)$ ändern, nämlich dann, wenn sich die Wärmedurchlässigkeit $KF_{21}$ z.B. durch Änderung der Viskosität der Reaktionsmasse oder durch Anbacken von Reaktionsmasse an die Meßkammerwand ändert. $L_b(t)$ muß bekannt sein, um beim Auftreten von Wärmeproduktion ($q_{Re} \neq o$) aus der registrierten Größe $L(t)$ die Wärmeproduktionsrate $q_{Re}(t)$ berechnen zu können. Zur Bestimmung von $L_b(t)$ ist folgende Kenntnis erforderlich:

Zeitlicher Verlauf der Temperatur des Produktionsreaktors 3 bzw. der Meßkammer 2: $f(t)$,

Zeitlicher Verlauf der Änderungsgeschwindigkeit der Temperatur des Reaktors 3 bzw. der Meßkammer 2: $g(t)$,

Zeitlicher Verlauf der Wärmedurchlässigkeit von der Meßkammer 2 zum Zwischenthermostat 1: $KF_{21}(t)$,

Rührleistung in der Meßkammer 2: $q_{Rü2}(t)$,

Zeitlicher Verlauf der effektiven Wärmekapazität der Meßkammerfüllung: $C_2(t)$.

a) Der zeitliche Verlauf der Temperatur $f(t)$ in der Meßkammer 2 wird durch unmittelbare Registrierung der Meßkammer- bzw. Reaktortemperatur gewonnen.

b) Der zeitliche Verlauf der Änderungsgeschwindigkeit $g(t)$ der Meßkammertemperatur wird durch on line-Differentiation von $f(t)$ gewonnen.

c) Der zeitliche Verlauf der Wärmedurchlässigkeit $KF_{21}(t)$ wird mittels Meßgrößen des Zwischenthermostaten 1 gewonnen. Im Regelgleichgewicht gilt folgende Wärmebilanz für den Zwischenthermostaten 1:

$$KF_{21} \cdot (T_2 - T_1) + L_{R\ddot{u}1} + L_1 = KF_{10} \cdot (T_1 - T_0)$$

oder

$$KF_{21} = [KF_{10} \cdot (T_1 - T_0) - L_{R\ddot{u}1} - L_1] / (T_2 - T_1),$$

wobei darstellen

$KF_{21}$     Wärmedurchlässigkeit von der Meßkammer 2 zum Zwischenthermostat 1,

$KF_{10}$     Wärmedurchlässigkeit von Zwischenthermostat 1 zum Sockelthermostat 0,

$L_{R\ddot{u}1}$     Rührleistung im Zwischenthermostaten 1,

$T_2$     Temperatur in der Meßkammer 2,

$T_1$     Temperatur im Zwischenthermostaten 1,

$T_0$     Temperatur im Sockelthermostaten 0,

$L_1$     Heizleistung im Zwischenthermostaten 1,

Zur kontinuierlichen Bestimmung von $KF_{21}$ müssen $KF_{10}$ und $L_{R\ddot{u}1}$ bekannt sein. Die Wärmedurchlässigkeit $Kf_{10}$ (Zwischenthermostat/Sockelthermostat) ist bei konstanter Temperatur (praktisch auch bei nicht zu großer Temperaturänderung) für gegebene Temperierflüssigkeit und gegebenen Füllgrad des Zwischen- und Sockelthermostaten 1, 0 sowie Tourenzahl des Rührers 8 eine konstante Größe. Sie stellt gewissermaßen eine Apparatekonstante dar, die bei Benutzung des Meßsystems als geschlossenes System, d.h. abgekoppelt vom Produktionsreaktor 3, folgendermaßen bestimmt werden kann:

Sind $L_1(1)$ und $L_1(2)$ zwei per Hand eingestellte konstante Heizleistungen und $T_1(1)$ und $T_1(2)$ die sich einstellenden Gleichgewichtstemperaturen, ergibt sich $KF_{10}$ aus

$$KF_{10} = [L_1(1) - L_1(2)] / [T_1(1) - T_1(2)].$$

Die Rührleistung $L_{R\ddot{u}1}$ im Zwischenthermostaten 1 ist wie $KF_{10}$ bei konstanter Temperatur (praktisch auch bei nicht zu großer Temperaturänderung) für gegebene Temperierflüssigkeit und gegebenen Füllgrad des Zwischenthermostaten 1 sowie gegebene Tourenzahl des Rührers 8 auch gewissermaßen eine Apparatekonstante, die sich ebenfalls durch Benutzung des Meßsytems als geschlossenes System bestimmen läßt: Vor Ankoppelung der Meßkammer 2 an den Produktionsreaktor 3 bestimmt man mittels zwei per Hand eingestellten Heizleistungen der Meßkammer 2 $L_2(1)$ und $L_2(2)$ und den sich einstellenden Gleichgewichtstemperaturen $T_2(1)$ und $T_2(2)$ die Wärmedurchlässigkeit (Meßkammer/Zwischenthermostat) $KF'_{21}$ (repräsentativ für den gerade in der Meßkammer 2 befindlichen Stoff) nach

$$KF'_{21} = [L_2(1) - L_2(2)] / [T_2(1) - T_2(2)].$$

Mittels $KF'_{21}$ und $KF_{10}$ ist dann die Rührleistung im Zwischenthermostaten gegeben durch die Wärmebilanz

$$L_{R\ddot{u}1} = KF_{10} \cdot (T_1 - T_0) - KF'_{21} \cdot (T_2 - T_1) - L_1.$$

d) Die Rührleistung $q_{R\ddot{u}2}$ läßt sich, wenn der Rührer 4 durch einen elektrischen Motor angetrieben wird, bei dem keine Ankerrückwirkung besteht, aus der Stromaufnahme des Motors bestimmen: Das Gesamtdrehmoment D, das ein elektrischer Motor beim Rühren einer Reaktionsmasse aufbringt, ist proportional der Stromaufnahme I, wobei der Proportionalitätsfaktor d (Drehmoment pro Ampere) bei gewöhnlichen Motoren eine Funktion der Stromstärke ist

$$D = d(I) \cdot I.$$

Bei einem elektrischen Motor ohne Ankerrückwirkung ist dagegen der Proportionalitätsfaktor (Drehmomentsfaktor) konstant und es gilt

$$D = const \cdot I = d \cdot I.$$

Das Gesamtdrehmoment, das der Motor beim Rühren der Reaktionsmasse aufbringt, setzt sich zusammen aus dem internen Verlustmoment des Motors (Wirbelströme, Reibung in den Motorlagern), dem externen Verlustmoment in der Rührerlagerung (beide abhängig von der Winkelgeschwindigkeit) und dem Nutzmoment:

$$D = D_{Verlust} + D_{Nutz} \bullet$$

Für die Leistung eines Motors ohne Ankerrückwirkung gilt somit

$$L_{Mo} = (D_{Verlust} + D_{Nutz}) \bullet w = D_{Verlust} \bullet w + q_{Rü2} = d \bullet I \bullet w,$$

wobei w die Winkelgeschwindigkeit der Motorwelle ist.

Sorgt man dafür, daß die Verluste in der Rührerlagerung sowie die Umdrehungszahl des Rührers 4 unverändert bleiben, d.h. daß $D_{Verlust}$ konstant bleibt, gilt bei dieser Winkelgeschwindigkeit (Umdrehungszahl)

$$q_{Rü2} = L_{Mo} - const = d \bullet w \bullet I - const.$$

Den Wert der Konstanten erhält man, indem man den Rührer 4 bei der gewählten Umdrehungszahl ohne Belastung (also bei leerer Meßkammer 2) laufen läßt. Dann ist $q_{Rü2} = 0$ und const $= d \bullet w \bullet I_o$. Bei der gewählten Umdrehungszahl und bei gefüllter Meßkammer 2 ist somit die Rührleistung bestimmt durch $q_{Rü2} = d \bullet w \bullet (I-I_o)$.

e) Im Gegensatz zu f, g, $KF_{21}$ und $q_{Rü2}$ läßt sich der zeitliche Verlauf der effektiven Wärmekapazität $C_2$ nicht aus stetig registrierbaren Meßdaten berechnen. Vielmehr wird die effektive Wärmekapazität $C_2$ in Zeitabständen mittels einer Näherungsbeziehung bestimmt.

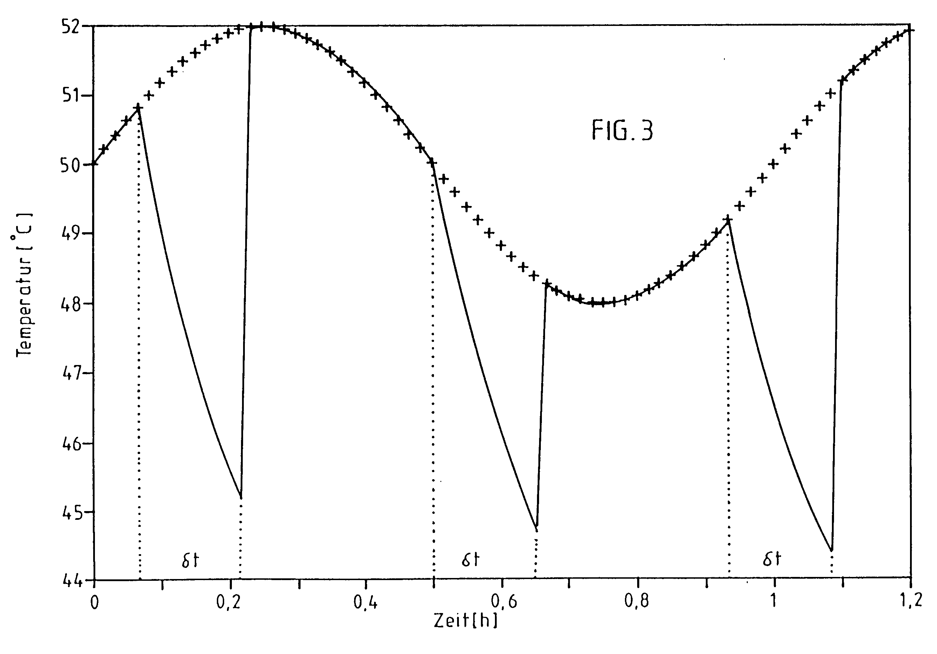

Dazu wird die Meßkammer 2 zu verschiedenen Zeiten $t_o$ für ein kurzes Zeitintervall $\delta t$ vom Produktionsreaktor 3 abgekoppelt, außerdem werden die Heizleistung $L_2$ abgeschaltet und der Temperaturverlauf $T_2$ registriert. Fig. 3 zeigt den entstehenden Temperaturverlauf $T_3$ für den Reaktor und für die Meßkammer $T_2$. In den Abschaltintervallen $\delta t$ sinkt die Temperatur $T_2$ ab. Unter diesen Bedingungen lautet für die Meßkammer die Wärmebilanz (mit $q = q_{Re} + q_{Rü2}$)

$$C_2 \bullet dT_2/dt = q - KF_{21} \bullet (T_2 - T_1)$$

oder wegen $T_1 = const$

$$d(T_2 - T_1)/dt = q/C_2 - KF_{21} \bullet (T_2 - T_1)/C_2.$$

Die Wärmeproduktionsrate $q = q_{Re} + q_{Rü2}$, die effektive Wärmekapazität $C_2$ und die Wärmedurchlässigkeit $KF_{21}$ sind Funktionen der Temperatur und der Zeit. Ist die Zeitkonstante der Reaktion groß im Vergleich zur Zeitkonstanten des Temperaturabfalls, das Zeitintervall $\delta t$ und der Temperaturabfall klein, können $C_2$, $KF_{21}$ und $q_{Rü2}$ im Zeitintervall $\delta t$ als praktisch konstant angenommen und q in Näherung mittels der Arrheniusbeziehung durch eine mittlere Wärmeproduktionsrate $q_m$ ersetzt werden;

$$q_m \approx (q(t_o) - q_{Rü2}) \bullet \exp(-E/RT_{2,m})/\exp(-E/RT_2(t_o)) + q_{Rü2}.$$

Darin bedeuten

$q(t_o)$     Wärmeproduktionsrate zum Zeitpunkt $t_o$ derAbkoppelung der Meßkammer,

$q_{Rü2}$     Rührleistung in der Meßkammer zur Zeit $t_o$,

$$T_{2,m} \approx (T_2(t_o) - T_2(t_o + \delta t))/\ln(T_2(t_o)/T_2(t_o + \delta t))$$

       mittlere Temperatur in der Meßkammer im Zeitintervall $\delta t$,

E        Aktivierungsenergie der Reaktion,

R        Gaskonstante.

Damit gilt im Intervall $\delta t$ annähernd

$$d(T_2 - T_1)/dt = q_m/C_{2,m} - KF_{21} \bullet (T_2 - T_1)/C_{2,m}.$$

Daraus folgt

$$[T_2(t)-T_1-q_m/KF_{21}] = [T_2(t_o)-T_1-q_m/KF_{21}] \cdot exp(-KF_{21} \cdot t/C_{2,m}).$$

Setzt man $T_2(t)-T_1-q_m/KF_{21} = a(t)$ läßt somit sich die effektive Wärmekapazität $C_2$ bestimmen durch die Beziehung:

$$C_{2,m} = (t_2-t_1) \cdot KF_{21}/\ln(a(t_1)/a(t_2)),$$

wobei $t_1$ und $t_2$ zwei Zeitpunkte innerhalb des Intervalls $\delta t$ sind.

Der Unterschied zwischen dem so berechneten Wert $C_{2,m}$ und der wahren effektiven Wärmekapazität $C_{2,w}$ ist umso kleiner, je größer die Zeitkonstante der Reaktion gegenüber der Zeitkonstanten des Temperaturabfalls und je größer der Wärmefluß aus der Meßkammer 2 in den Zwischenthermostaten 1 gegenüber der Wärmeproduktionsrate sind.

Die Prüfung auf hinreichend genaue Bestimmbarkeit der effektiven Wärmekapazität, d.h. letzten Endes auf die Brauchbarkeit des Meßsystems sowie die Bestimmung seiner Einsatzgrenzen, wurde anhand von Simulationsrechnungen durchgeführt. Der Simulation wurde eine chemische Reaktion zugrunde gelegt, die formal einer Polymerisation mit Induktionsphase entspricht:

$$\textbf{Reaktionsschema} \qquad A \longrightarrow A^* \longrightarrow P$$

$$\textbf{Reaktionsgeschwindigkeiten} \qquad r_1 = k_1 \cdot a$$
$$r_2 = k_2 \cdot a^*$$

$$\textbf{Arrheniusgesetz} \qquad k_1 = k_{oi} \exp(-E_i/RT)$$
$$\textbf{Präexponentielle} \qquad k_{o1} = 6 \cdot 10^8 \; s^{-1}$$
$$\textbf{Faktoren} \qquad k_{o2} = 2 \cdot 10^8 \; s^{-1}$$

$$\textbf{Aktivierungsenergien} \qquad E_1 = 77 \; kJ/mol$$
$$E_2 = 77 \; kJ/mol$$

$$\textbf{Reaktionswärme}$$
$$\textbf{des 1. Reaktionsschrittes} \quad \Delta H_1 = 0 \qquad kJ/mol$$
$$\textbf{des 2. Reaktionsschrittes} \quad \Delta H_2 = -84 \qquad kJ/mol$$

Startkonzentrationen

im Reaktor $\qquad$ $a_0 = 0,006 \quad mol/g$

$a_0{}^* = 0 \qquad mol/g$

$P_0 = 0 \qquad mol/g$

Startkonzentrationen

in der Meßkammer $\qquad$ $a_0 = a_0{}^* = P_0 = 0 \, mol/g$

oder wie im Reaktor

Mengenfluß durch die

Meßkammer $\qquad$ $m = 1,67 \qquad g/s$

Füllung der Meßkammer 1 $G_1 = 1000 \qquad g$

Füllung Reaktor $\qquad$ $G_3 \gg G_1$

Wärmedurchlässigkeit $\qquad$ $KF_{21} = 8 \, W/K$ oder veränderlich

effektive Wärmekapazität $\qquad$ $C_{2,w} = 4,186 \, J/K$ oder veränderlich

Rührleistung $\qquad$ $q_{Rü2} = 4 \, W$

Soll-Reaktortemperatur $\qquad$ $T_3 = 50^0 \, C$

Temperatur im

Zwischenthermostaten $\qquad$ $T_1 = 40^0 \, C$

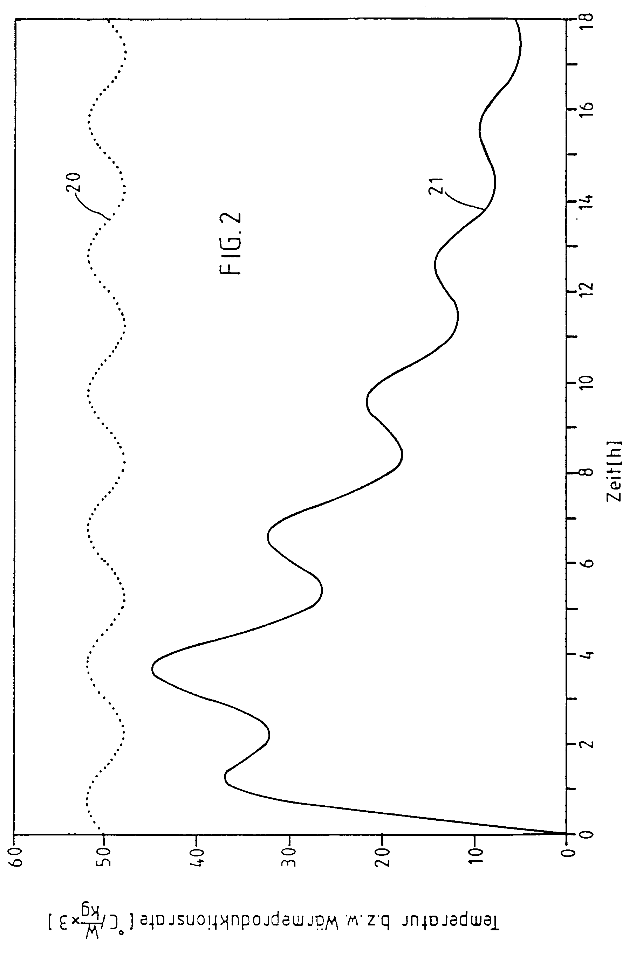

Ohne Einschränkung des Allgemeinen wurde angenommen, daß die Reaktortemperatur $T_3$ sinusförmig mit der Amplitude $\Delta T = 2°C$ schwankt. Die Schwingungsdauer wurde variiert, Fig.2 zeigt beispielsweise den zeitlichen Verlauf der Temperatur bei einer Schwingungsdauer von 3 h sowie die korrespondierende spezifische Wärmeproduktionsrate $q_{Re}$ (W/kg) im Reaktor 3 bei einer Schwingungsdauer von 3 h. Fig. 3 gibt den zeitlichen Verlauf der Temperatur von Reaktor 3 und Meßkammer 2 während der Anfangsphase der Reaktion wieder. Die Meßkammer ist im Regelgleichgewicht, d.h. die Meßkammer und der Reaktor zeigen im gekoppelten Zustand die gleiche Temperatur. Während der Anfangsphase wurde drei Mal abgekoppelt und aus der Temperaturabklingkurve der Meßkammer die effektive Wärmekapazität $C_2$ berechnet. Die Abbildung zeigt die Abklingkurve der Meßkammertemperatur $T_2$, wie sie in den Abkoppelzeiten $\delta t$ auftraten. Der erste $C_{2,m}$-Wert wurde aus der Temperaturabklingkurve vor Reaktionsstart ($q_{Re} = 0$) bestimmt. Dieser Wert wurde mittels der Messung der Temperaturabklingkurve der Meßkammer 2 vor Reaktionsstart bestimmt.

Zusätzlich wurde der Fall angenommen, daß die Aktivierungsenergie E nicht bekannt war. Ohne Kenntnis der Aktivierungsenergie läßt sich für die Abkoppelungsphase keine mittlere Wärmeproduktionsrats $q_m$ berechnen. Für diesen Fall wurde daher angenommen, daß die Wärmeproduktionsrats während der Abkoppelungsphase unverändert gleich der zum Zeitpunkt $t_0$ der Abkoppelung bleibt. Es wurde also $q_m = q$-

$(t_o)$ gesetzt.

Da aber die Reaktionsgeschwindigkeit und damit die Wärmeproduktionsrate durch Reaktion in jedem Fall temperaturabhängig sind, ist es im Falle unbekannter Kinetik vorteilhafter, eine mittlere Aktivierungsenergie von 20 kcal/mol = 84 kJ/mol für eine normale Polymerreaktion anzusetzen.

Die folgende Tabelle gibt die Ergebnisse der Berechnung der effektiven Wärmekapazität $C_{2,m}$ der Meßkammerfüllung für acht Zeitpunkte über die gesamte Reaktionsdauer verteilt (18 h) wieder. Im Fall (a) war die Aktivierungsenergie E bekannt und $q_m$ konnte nach dem oben beschriebenen Verfahren berechnet werden, im Fall (b) ist E als unbekannt angenommen. Daher läßt sich $q_m$ nicht berechnen und wird durch q-$(t_o)$ ersetzt. Die Abkoppelzeit betrug jeweils 10 min.

| Zeit [h] | (a) $C_{2,m}$ [J/K] | (b) $C_{2,m}$ [J/K] |
|----------|---------------------|---------------------|
| 0,1 | 4120 | 3862 |
| 0,7 | 4124 | 3891 |
| 1,1 | 4128 | 3915 |
| 2,5 | 4156 | 3981 |
| 3,8 | 4178 | 4049 |
| 6,0 | 4178 | 4049 |
| 12,0 | 4185 | 4127 |
| 18,0 | 4188 | 4161 |

Der tatsächliche Wert betrug $C_{2,w}$ = 4186 J/K. Die Simulation zeigte, daß die $C_2$-Berechnung über die gesamte Reaktionsdauer, also auch bei geringer werdender Wärmeproduktionsrate, genaue Werte ergibt.

Bei Mittelung über 30 Meßwerte ergaben sich folgende Fehler:

a) mit Kenntnis der Aktivierungsenergie der Reaktion d.h. mit Berechnung von $q_m$,

$$C_{2,m} = C_{2,w} \cdot (1 \pm 6,3 \cdot 10^{-3}) \text{ J/K},$$

b) ohne Kenntnis der Aktivierungsenergie der Reaktion d.h. mit der Annahme $q_m = q(t_o)$,

$$C_{2,m} = C_{2,w} \cdot (1 \pm 3,3 \cdot 10^{-2}) \text{ J/K}.$$

Aus dem Fehlerfortpflanzungsgesetz folgt, daß der mittlere Fehler der Bezugslinie $L_b$ in erster Linie durch die Änderungsgeschwindigkeit g der Reaktortemperatur $T_3 = T_2$ geprägt ist. Bei den zugrunde gelegten Versuchsbedingungen ergab sich maximal im Fall

a) $L_b = L_{b,w} \cdot (1 \pm 9,6 \cdot 10^{-4})$ W
b) $L_b = L_{b,w} \cdot (1 \pm 4,8 \cdot 10^{-3})$ W

Dies galt bis zu einem Verhältnis 15/l der Zeitkonstanten von Reaktion und Temperaturabfall herab.

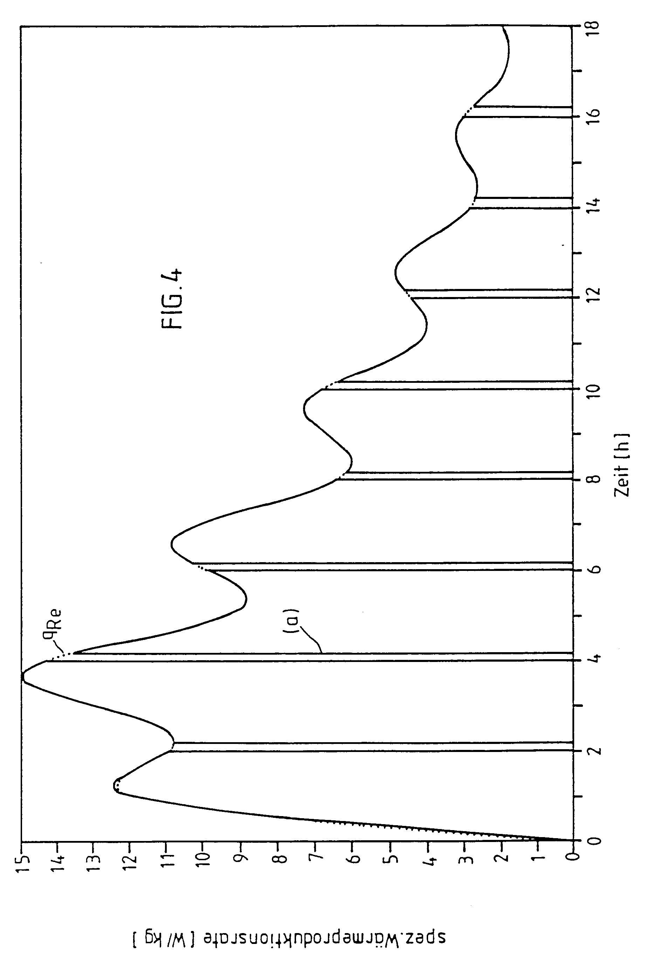

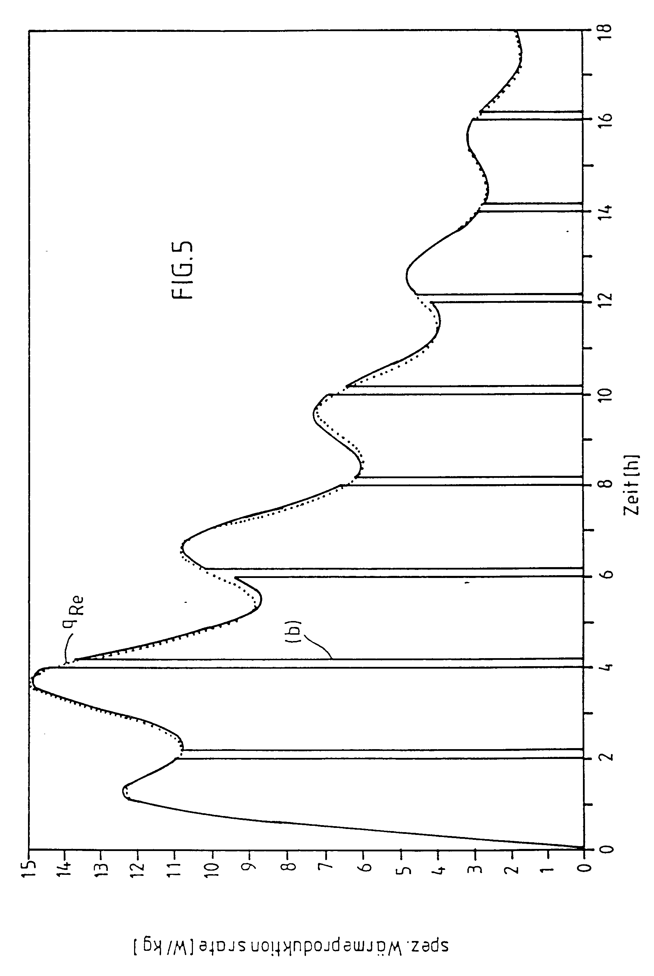

Die Figuren 4 und 5 zeigen den Verlauf der nach dem neuen Verfahren bestimmten und der im Reaktor vorgelegten Wärmeproduktionsraten. In Fig. 4 wurde die Aktivierungsenergie E zur Berechnung benutzt (Fall (a)) und in Fig. 5 wurde, wie beschrieben, $q_m$ durch $q(t_o)$ ersetzt (Fall (b)). Der Vergleich zeigt, daß - obwohl beide Varianten des Verfahrens gute Übereinstimmung mit der Vorgabe zeigen - die Variante (a) genauer ist. Der Verlauf der berechneten Kurve für $q_{Re}$ ist in den Zeitintervallen $\delta t$ unterbrochen, in denen die zur Bestimmung der effektiven Wärmekapazität $C_{2,m}$ notwendigen Messungen der Temperaturabklingkurven durchgeführt wurden.

Die Hauptvoraussetzung für einen aussagekräftigen Einsatz des Durchflußkalorimeters ist, wie für jeden Sensor, der eine repräsentative Angabe über den Gesamtzustand der Reaktionsmischung im Produktionsreaktor geben soll, daß der Inhalt des Produktionskessels gut durchmischt ist.

Bei homogenen bzw. quasi-homogenen Reaktionssystemen, bei denen der Stoffaustausch keinen reaktionskinetischen Einfluß hat, ist der Einsatz problemlos. Bedingung ist lediglich, daß die Reaktionsmasse nicht zu viskos ist, da anderenfalls in der Meßkammer Temperaturschlieren auftreten, die Regelstörungen hervorrufen. Bei heterogenen Reaktionsmischungen, bei denen die Umsetzungsgeschwindigkeit durch den Stoffaustausch zwischen den Phasen mitbestimmt werden kann, ist die spezifische Rührleistung in der Meßkammer so einzustellen, daß in der Meßkammer 2 die Stoffdurchlässigkeit ($k_L a$-Wert) derjenigen im Produktionsreaktor 3 entspricht. Dies ist aufgrund der bekannten Übertragungsregeln in der Rührtechnik ohne weiteres möglich.

Da die tatsächliche Wärmeproduktionsrats in einem Großreaktor - wie oben erwähnt - nach herkömmlichen, bekannten Verfahren nur sehr ungenau bestimmt werden kann, wurde das Verfahren an einem Testsystem durchgeführt, bei dem die in der Meßkammer 2 eigentlich durch chemische Reaktionen hervorgerufene Wärmeproduktionsrate durch definiertes elektrisches Heizen ersetzt wurde. Neben dem Sensor bestand das Testsystem noch aus einem Laborthermostaten, der in definierter Weise die Temperaturschwankungen des Produktionsreaktors 3 nachvollzog, sowie den beschriebenen Zusatzeinrichtungen (Leitungen, Pumpen, Zuleitungstemperierer). Weiter wurden die Zuleitungen 12 zur Meßkammer 2 mit einer Temperaturregelung 17 versehen, welche die Zuflußmasse zur Meßkammer so temperiert, daß ihre Temperatur $T_4$ trotz leichter Änderung auf dem Transportweg zum Sensor (durch Pumpleistung, Abstrahlung u.a.) am Eingang zur Meßkammer 2 stets mit der Temperatur $T_3$ des Produktionsreaktors 3 übereinstimmt. Das System wurde mit einer inerten Substanz (Silikonöl) gefüllt, so daß keine störenden chemischen Reaktionen in der Füllung auftraten. Wegen $q_{Re} = 0$ vereinfacht sich die oben bereits erläuterte Beziehung:

$$q_{Re} = L_b\text{-}L_2 = [C_2{}^*dT_2/dt + KF_{21}{}^*(T_2\text{-}T_1) - q_{Rü2}] - L_2$$

zu

$$L_2 = L_b = C_2{}^*dT_2/dt + KF_{21}{}^*(T_2\text{-}T_1) - q_{Rü2},$$

d.h. die berechnete Bezugsgröße $L_b$ muß mit der gemessenen Größe $L_2$ übereinstimmen.

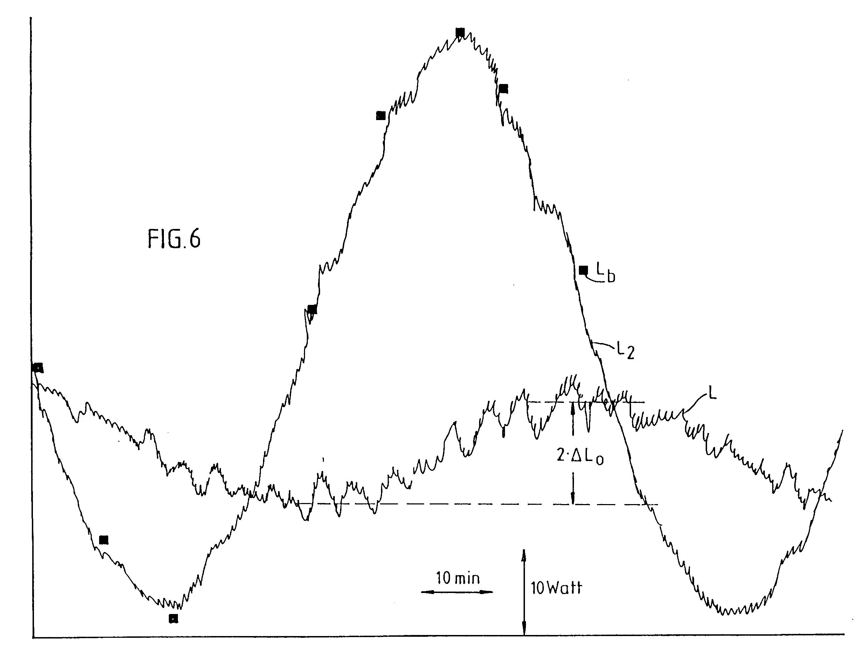

Fig. 6 gibt den Verlauf der gemessenen und der berechneten Heizleistung ($L_2$ und $L_b$) bei sinusförmiger Schwankung der Temperatur des Produktionsreaktors $T_3$ um $2°C$ wieder. Die Punkte $L_b$ wurden mittels der Beziehung $L_b = C_2{}^*dT_2/dt + KF_{21}{}^*(T_2\text{-}T_1)\text{-}q_{Rü2}$ berechnet. Sie liegen hinreichend genau auf der gemessenen Kurve $L_2$.

Durch Kombination der Wärmebilanzen für den Zwischenthermostaten $T_1$ und die Meßkammer $T_2$ im Regelgleichgewicht (s.o.) folgt weiter

$$q_{Re} = [KF_{10}{}^*\Delta T_1 - q_{Rü1}] - [L_1 + L_2 + q_{Rü2}] + C_2{}^*dT_2/dt$$
$$= [KF_{10}{}^*\Delta T_1 - q_{Rü1}] - L + C_2{}^*dT_2/dt$$

mit $KF_{10}$ bzw. $\Delta T_1$: Wärmedurchlässigkeit bzw. Temperaturdifferenz zwischen Zwischenthermostat und Sockelthermostat,

$q_{Rü1}$: Rührleistung im Zwischenthermostaten,

L: Summe der thermischen Leistungen $L_1$, $L_2$, $q_{Rü2}$

Da $KF_{10}$, $\Delta T_1$ und $q_{Rü2}$ vom Reaktionsablauf nicht beeinflußt werden, gewissermaßen Apparatekonstanten darstellen, gilt

$$q_{Re} = const - L + C_2{}^*dT_2/dt.$$

Gilt $q = 0$ (wie in diesem Beispiel) folgt

$$L - const = C_2{}^*dT_2/dt,$$

d.h. in diesem Fall läßt sich mittels L (Summe der thermischen Leistungen) sowie der Änderungsgeschwindigkeit $dT_2/dt$ der Temperatur der Meßkammer 2 die effektive Wärmekapazität $C_2$ der Meßkammerfüllung bestimmen.

Im vorliegenden Beispiel änderte sich die Temperatur $T_2$ sinusförmig um einen konstanten Wert mit der Amplitude $\Delta T$ und der Kreisfrequenz w. Es galt dann

$$L - const = \Delta L = C_2{}^*\Delta T^*w^*cos(w^*t),$$

d.h. aus der maximalen Schwankung $\Delta L_o$ der Summe der thermischen Leistungen (Fig. 6) und der maximalen Amplitude der Temperaturschwankung $\Delta T$ errechnete sich die effektive Wärmekapazität $C_2$ nach

EP 0 482 469 B1

$$C_2 = \Delta L_o/(\Delta T^* w).$$

Es ergab sich $C_2 = 2472$ J/grad.

$C_2$ ist erwartungsgemäß größer als die Wärmekapazität der reinen Silikonölfüllung, da sich die effektive Wärmekapazität der Meßkammerfüllung sowohl aus der Wärmekapazität des Silikonöls (2081 J/grad) als auch aus den Wärmekapazitäten von Rührer 4, Strombrechern und einem Bruchteil der Meßkammerwand zusammensetzt.

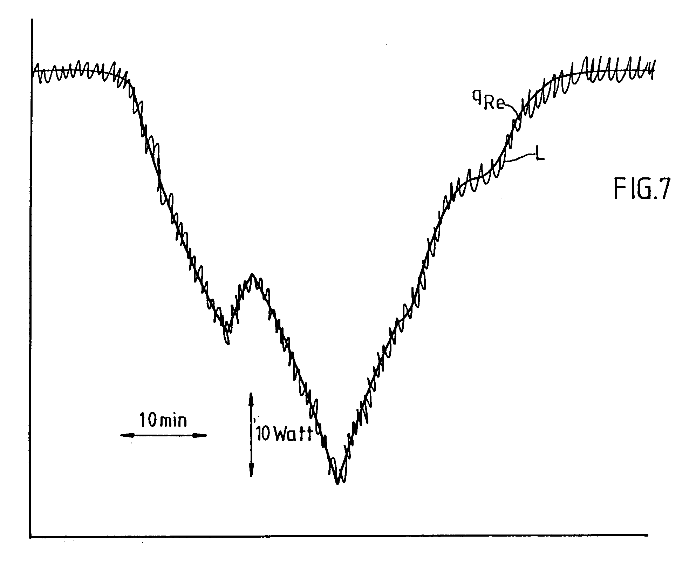

Zur Simulation einer Wärmeproduktionsrate einer Reaktion wurde in der Meßkammer ein elektrisches Heizelement installiert. Fig. 7 zeigt den zeitlichen Verlauf der mit dem Heizelement erzeugten Wärmeproduktionsrate $q_{Re}$ (glatte Linie) sowie den kompensierenden Verlauf der thermischen Leistung $L = L_1 + L_2 + q_{Rü2}$ des Kalorimeter-Sensors (fluktuierende Linie). Die Temperatur des Produktionsreaktors war bei der Messung konstant. Zur Registrierung wurden die Signale für $q_{Re}$ (Simulationsheizung) und L mit entgegengesetzten Vorzeichen mit einem Schreiber aufgezeichnet und vor dem Start der simulierten Reaktion durch Nullpunktsverschiebung in Deckung gebracht. Auch nach Einsetzen der "Reaktion" ($q_{Re} \neq o$) muß der zeitliche Verlauf beider Linien unter den gegebenen Bedingungen übereinstimmen (s. Fig. 7).

**Patentansprüche**

1.  Verfahren zur Messung der Wärmeproduktionsrate in einem Reaktor (3) mittels eines Kalorimeters, das aus Meßkammer (2), Zwischenthermostat (1) und Sockelthermostat (0) besteht und unter Zugrundelegung der Wärmebilanzgleichung der Meßkammer (2)

$$q_{Re} + q_{Mi} + q_{Rü2} + L_2 + m \cdot c_3 \cdot T_3 - m \cdot c_2 \cdot T_2 = C_2 \cdot dT_2/dt + KF_{21} \cdot (T_2 - T_1),$$

    wobei die Größe $KF_{21} \cdot (T_2 - T_1)$ unter Ausnutzung der Wärmebilanzgleichung des Zwischenthermostaten (1)

$$KF_{21} \cdot (T_2 - T_1) + L_{Rü1} + L_1 = KF_{10} \cdot (T_1 - T_o)$$

    mit

| | |
|---|---|
| $C_2$ | effektive Wärmekapazität der Meßkammerfüllung, |
| $q_{Re}$ | Wärmeproduktionsrate durch Reaktion in der Meßkammer, |
| $q_{Mi}$ | Wärmeproduktionsrate durch Mischen in der Meßkammer, |
| $q_{Rü2}$ | Wärmeproduktionsrate durch Rühren in der Meßkammer, |
| $L_2$ | elektrische Heizleistung in der Meßkammer, |
| $m$ | Massenstrom durch die Meßkammer, |
| $c_3$ | spezifische Wärme der Zuflußmasse (Produktionsreaktor), |
| $c_2$ | spezifische Wärme der Abflußmasse (Meßkammer), |
| $L_1$ | elektrische Heizleistung des Zwischenthermostaten |
| $L_{Rü1}$ | Wärmeproduktionsrate durch Mischen im Zwischenthermostaten |
| $KF_{10}$ | Wärmedurchlässigkeit von Zwischenthermostaten zum Sockelthermostaten |
| $T_3$ | Temperatur des Produktionsreaktors, |
| $T_2$ | Temperatur der Meßkammer, |
| $T_1$ | Temperatur des Zwischenthermostaten, |
| $KF_{21}$ | Wärmedurchlässigkeit der Meßkammer zum Zwischenthermostat. |
| $T_o$ | Temperatur des Sockelthermostaten |

    bestimmt wird, dadurch gekennzeichnet, daß die Zusammensetzung der Stoffmenge in der Meßkammer (2) des Kalorimeters ständig der Zusammensetzung der Stoffmenge im Reaktor (3) angeglichen wird ($q_{Mi} = 0$ und $c_2 = c_3$) und die Temperatur der Stoffmenge in der Meßkammer (2) ständig der Temperatur der Stoffmenge im Reaktor (3) angeglichen wird ($m \cdot c_3 \cdot T_3 - m \cdot c_2 \cdot T_2 = 0$) und der Stofftransport vom Reaktor (3) in die Meßkammer (2) zur Bestimmung der effektiven Wärmekapazität $C_2$ unter Zugrundelegung der dann geltenden Wärmebilanz

$$C_2 \cdot dT_2/dt = q_{Re} + q_{Rü2} - KF_{21} \cdot (T_2 - T_1)$$

    für ein Zeitintervall $\delta t$ unterbrochen wird und aus der Wärmebilanz der Meßkammer (2) die Wärmeproduktionsrate $q_{Re}$ der Meßkammer (2) bestimmt wird und nach Berücksichtigung des Volumen- oder Massenverhältnisses zwischen Reaktor- und Meßkammerfüllung die Warmeproduktionsrate im Reaktor

12

(3) bestimmt wird.

2. Verfahren nach Anspruch 1, dadurch gekennzeichnet, daß zur Bestimmung der effektiven Wärmekapazität $C_2$ in dem Zeitintervall $\delta t$ $T_2$ und $T_1$ gemessen, $C_2$ selbst und $KF_{21}$ als konstant angenommen werden, und $q_{Re} + q_{Rü2}$ für das Zeitintervall $\delta t$ durch eine mittlere Wärmeproduktionsrate $q_m$ ersetzt wird.

3. Verfahren nach den Ansprüchen 1 bis 2, dadurch gekennzeichnet, daß zur Bestimmung der effektiven Wärmekapazität $C_2$ die unbekannten Parameter $C_2$ und $q_{Re}$ in der zugrunde liegenden Wärmebilanz

$$C_2 \cdot dT_2/dt = q_{Re} + q_{Rü2} - KF_{21} \cdot (T_2 - T_1)$$

durch Messung von $T_1$ und $T_2$ während des Zeitintervalls $\delta t$ und durch Durchführung einer an sich bekannten mathematischen Methode ermittelt werden.

4. Verfahren nach den Ansprüchen 1 bis 3, dadurch gekennzeichnet, daß die Temperatur des Stoffgemisches beim Eintritt in die Meßkammer (2) durch Heizen oder Kühlen der Verbindungsleitung (12) zwischen Reaktor (3) und Meßkammer (2) gleich der Temperatur des Stoffgemisches im Reaktor (3) gehalten wird.

5. Kalorimeter zur Durchführung des Verfahrens nach Anspruch 1, bestehend aus einer Meßkammer (2), die mindestens einen Temperaturfühler (6), eine regelbare Heizung (5) mit einer Leistungmeßschaltung (7) und ein Rührwerk (4) aufweist, einem Zwischenthermostaten (1), der mindestens einen Temperaturfühler (9) und eine regelbare Heizeinrichtung (11) mit einer Leistungsmeßschaltung (17) aufweist, und einem Sockelthermostaten (0), wobei die regelbare Heizeinrichtung (11) eine konstante Temperaturdifferenz $\Delta T_1$ zwischen dem Sockel- und dem Zwischenthermostaten (0,1) aufrechterhält, dadurch gekennzeichnet, daß das Kalorimeter mindestens eine Verbindung (12) zum Stofftransport vom Reaktor (3) in die Meßkammer (2) des Kalorimeters und eine Meß- und Regelschaltung (7) aufweist, die die Temperatur in der Meßkammer (2) der Temperatur im Reaktor (3) anpaßt.

6. Vorrichtung nach Anspruch 5, dadurch gekennzeichnet, daß die Verbindung (12) eine Pumpeinrichtung (13) zum kreisenden Stofftransport zwischen Reaktor (3) und Meßkammer (2) aufweist.

7. Vorrichtung nach den Ansprüchen 5 bis 6, dadurch gekennzeichnet, daß die Eintrittsstelle der Verbindung (12) in die Meßkammer (2) einen Temperaturfühler (15) aufweist und die Verbindung (12) eine regelbare Heiz/Kühlvorrichtung (16) mit einer Steuereinheit (17) aufweist, die die Eintrittstemperatur des aus dem Reaktor (3) stammenden Stoffgemisches in der Meßkammer (2) auf die im Reaktor (3) herrschende Temperatur einstellt.

**Claims**

1. Process for measuring the heat output rate in a reactor (3) with the aid of a calorimeter, which comprises a measuring cell (2), an intermediate thermostat (1) and a base thermostat (0), and taking as a basis the heat balance equation of the measuring cell (2)

$$q_{Re} + q_{Mi} + q_{Rü2} + L_2 + m \cdot c_3 \cdot T_3 - m \cdot c_2 \cdot T_2 \ = \ C_2 \cdot dT_2/dt + KF_{21} \cdot (T_2 - T_1),$$

with the quantity $KF_{21} \cdot (T_2 - T_1)$ being determined using the heat balance equation of the intermediate thermostat (1)

$$KF_{21} \cdot (T_2 - T_1) + L_{Rü1} + L_1 = KF_{10} \cdot (T_1 - T_o),$$

with

| | |
|---|---|
| $C_2$ | effective heat capacity of the measuring cell content, |
| $q_{Re}$ | heat output rate as a result of reaction in the measuring cell, |
| $q_{Mi}$ | heat output rate as a result of mixing in the measuring cell, |
| $q_{Rü2}$ | heat output rate as a result of agitation in the measuring cell, |
| $L_2$ | electrical heat output in the measuring cell, |
| $m$ | mass flow through the measuring cell, |

$c_3$        specific heat of the inflow mass (production reactor),

$c_2$        specific heat of the outflow mass (measuring cell),

$L_1$        electrical heat output of the intermediate thermostat,

$L_{Rü1}$        heat output rate as a result of mixing in the intermediate thermostat,

$KF_{10}$        diathermancy from intermediate thermostat to base thermostat,

$T_3$        temperature of the production reactor,

$T_2$        temperature of the measuring cell,

$T_1$        temperature of the intermediate thermostat,

$KF_{21}$        diathermancy of the measuring cell to the intermediate thermostat,

$T_o$        temperature of the base thermostat,

characterised in that the composition of the quantity of substance in the measuring cell (2) of the calorimeter is continuously adjusted to the composition of the quantity of substance in the reactor (3) ($q_{Mi} = 0$ and $c_2 = c_3$) and the temperature of the quantity of substance in the measuring cell (2) is continuously adjusted to the temperature of the quantity of substance in the reactor (3) ($m \cdot c_3 \cdot T_3 - m \cdot c_2 \cdot T_2 = 0$) and the transport of substance from the reactor (3) into the measuring cell (2) is interrupted for a period $\delta t$ to determine the effective heat capacity $C_2$ taking as a basis the then prevailing heat balance

$$C_2 \cdot dT_2/dt = q_{Re} + q_{Rü2} - KF_{21} \cdot (T_2 - T_1)$$

and the heat output rate $q_{Re}$ of the measuring cell (2) is determined from the heat balance of the measuring cell (2) and, after taking into account the volume or mass ratio between the reactor and measuring cell contents, the heat output rate in the reactor (3) is determined.

2. Process according to claim 1, characterised in that to determine the effective heat capacity $C_2$ in the period $\delta t$ $T_2$ and $T_1$ are measured, $C_2$ itself and $KF_{21}$ are assumed to be constant, and $q_{Re} + q_{Rü2}$ for the period $\delta t$ are replaced by a mean heat output rate $q_m$.

3. Process according to claims 1 to 2, characterised in that, to determine the effective heat capacity $C_2$, the unknown parameters $C_2$ and $q_{Re}$ in the heat balance taken as a basis

$$C_2 \cdot dT_2/dt = q_{Re} + q_{Rü2} - KF_{21} \cdot (T_2 - T_1)$$

are determined by measuring $T_1$ and $T_2$ during the period $\delta t$ and by effecting a known mathematical method.

4. Process according to claims 1 to 3, characterised in that the temperature of the substance mixture upon entry into the measuring cell (2) is kept equal to the temperature of the substance mixture in the reactor (3) by heating or cooling the connecting line (12) between reactor (3) and measuring cell (2).

5. Calorimeter for effecting the process according to claim 1, comprising a measuring cell (2), which has at least one temperature detector (6), a controllable heating device (5) with an output measuring circuit (7) and an agitator (4), an intermediate thermostat (1), which has at least one temperature detector (9) and a controllable heating device (11) with an output measuring circuit (17), and a base thermostat (0), with the controllable heating device (11) maintaining a constant temperature difference $\Delta T_1$ between the base and the intermediate thermostat (0, 1), characterised in that the calorimeter has at least one connection (12) for transporting substance from the reactor (3) into the measuring cell (2) of the calorimeter and a measurement and control circuit (7) which adjusts the temperature in the measuring cell (2) to the temperature in the reactor (3).

6. Apparatus according to claim 5, characterised in that the connection (12) has a pump device (13) for circulating substance between the reactor (3) and the measuring cell (2).

7. Apparatus according to claims 5 to 6, characterised in that the inlet point of the connection (12) into the measuring cell (2) has a temperature detector (15) and the connection (12) has a controllable heating/cooling device (16) with a control unit (17) which adjusts the inlet temperature of the substance mixture coming from the reactor (3) into the measuring cell (2) to the temperature prevailing in the reactor (3).

**Revendications**

1. Procédé de mesure du taux de production de chaleur dans un réacteur (3) au moyen d'un calorimètre qui est constitué d'une chambre de mesure (2), d'une enceinte intermédiaire thermostatisée (1) et d'une enceinte de support thermostatisée (0), et sur base de l'équation de bilan thermique de la chambre de mesure (2)

$$q_{Re} + q_{Mi} + q_{R\ddot{u}2} + L_2 + m.c_3.T_3 - m.c_2.T_2 = C_2.dT_2/dt + KF_{21}.(T_2 - T_1),$$

tandis que la grandeur $KF_{21}.(T_2 - T_1)$ est déterminée à l'aide de l'équation du bilan thermique de l'enceinte intermédiaire thermostatisée (1):

$$KF_{21}.(T_2 - T_1) + L_{R\ddot{u}1} + L_1 = KF_{10}.(T_1 T_0)$$

avec:

$C_2$     capacité calorifique effective de la charge de la chambre de mesure,

$q_{Re}$     taux de production de chaleur par réaction dans la chambre de mesure,

$q_{Mi}$     taux de production de chaleur par mélange dans la chambre de mesure,

$q_{R\ddot{u}2}$     taux de production de chaleur par agitation dans la chambre de mesure,

$L_2$     puissance électrique de chauffage dans la chambre de mesure,

$m$     flux massique traversant la chambre de mesure,

$c_3$     chaleur spécifique de la masse d'alimentation (réacteur de production),

$c_2$     chaleur spécifique de la masse déchargée (chambre de mesure),

$L_1$     puissance électrique du chauffage de l'enceinte intermédiaire thermostatisée,

$L_{R\ddot{u}1}$     taux de production de chaleur par mélange dans l'enceinte intermédiaire thermostatisée,

$KF_{10}$     transmission calorifique entre l'enceinte intermédiaire thermostatisée et l'enceinte de support thermostatisée,

$T_3$     température du réacteur de production,

$T_2$     température de la chambre de mesure,

$T_1$     température de l'enceinte intermédiaire thermostatisée,

$KF_{21}$     transmission calorifique de la chambre de mesure par rapport à l'enceinte intermédiaire thermostatisée,

$T_0$     température de l'enceinte de support thermostatisée,

caractérisé en ce que la composition des matières présentes dans la chambre de mesure (2) du calorimètre est en permanence égalisée à la composition des matières dans le réacteur (3) ($q_{Mi} = 0$ et $c_2 = c_3$), et en ce que la température des matières présentes dans la chambre de mesure (2) est en permanence égalisée à la température des matières dans le réacteur (3) ($m.c_3.T_3 - m.c_2.T_2 = 0$), et en ce que le transport de matière du réacteur (3) jusque dans la chambre de mesure (2) est interrompu pendant un intervalle de temps $\delta t$ en vue de la détermination de la capacité calorifique effective $C_2$ sur base du bilan thermique valable à ce moment:

$$C_2.dT_2/dt = q_{Re} + q_{R\ddot{u}2} - KF_{21}.(T_2 - T_1)$$

et en ce que le taux de production de chaleur $q_{Re}$ de la chambre de mesure (2) est déterminé à partir du bilan thermique de la chambre de mesure (2), et le taux de production de chaleur dans le réacteur (3) est déterminé après avoir pris en compte les rapports de volume ou de masse des charges du réacteur et de la chambre de mesure.

2. Procédé selon la revendication 1, caractérisé en ce que pour la détermination de la capacité calorifique effective $C_2$ dans l'intervalle de temps $\delta t$, $T_2$ et $T_1$ sont mesurés $C_2$ lui-même et $KF_{21}$ sont posés comme étant constants et $q_{Re} + q_{R\ddot{u}2}$ est remplacé pendant l'intervalle de temps $\delta t$ par un taux moyen de production de chaleur $q_m$.

3. Procédé selon les revendications 1 à 2, caractérisé en ce que pour la détermination de la capacité calorifique effective $C_2$, les paramètres $C_2$ et $q_{Re}$ inconnus du bilan thermique fondamental

$$C_2.dT_2/dt = q_{Re} + q_{R\ddot{u}2} - KF_{21}.(T_2 - T_1)$$

sont calculés par mesure de $T_1$ et $T_2$ pendant l'intervalle de temps $\delta t$ et en exécutant une méthode mathématique en soi connue.

4. Procédé selon les revendications 1 à 3, caractérisé en ce que la température du mélange de matière à l'entrée dans la chambre de mesure (2) est maintenue égale à la température du mélange de matière dans le réacteur (3), par chauffage ou refroidissement de la conduite de raccordement (12) entre le réacteur (3) et la chambre de mesure (2).

5. Calorimètre en vue de l'exécution du procédé selon la revendication 1, constitué d'une chambre de mesure (2) qui présente au moins une sonde de température (6), un chauffage régulable (5) comportant un circuit de mesure de puissance (7), et un agitateur (4), d'une enceinte intermédiaire thermostatisée (1), qui présente au moins une sonde de température (9) et un dispositif de chauffage régulable (11) comportant un circuit de mesure de puissance (17), et d'une enceinte de support thermostatisée (0), tandis que le dispositif régulable de chauffage (11) maintient une différence de température $\Delta T_1$ constante entre l'enceinte de support thermostatisée et l'enceinte intermédiaire thermostatisée (0, 1), caractérisé en ce que le calorimètre présente au moins une communication (12) en vue du transport de matière depuis le réacteur (3) jusque dans la chambre de mesure (2) du calorimètre, ainsi qu'un circuit de mesure et de régulation (7) qui adapte la température dans la chambre de mesure (2) à la température dans le réacteur (3).

6. Dispositif selon la revendication 5, caractérisé en ce que la liaison (12) présente un dispositif de chauffage (13) pour un transport de matière en circuit fermé entre le réacteur (3) et la chambre de mesure (2).

7. Dispositif selon les revendications 5 à 6, caractérisé en ce que le point d'entrée de la liaison (12) dans la chambre de mesure (2) présente une sonde de température (15), et en ce que la liaison (12) présente un dispositif régulable de chauffage/refroidissement (16) comportant une unité de commande (17) qui règle à la température régnant dans le réacteur (3), la température d'entrée du mélange de matières provenant du réacteur (3) dans la chambre de mesure (2).

FIG.1

EP 0 482 469 B1

FIG. 2

Temperatur b.z.w. Wärmeproduktionsrate [°C/$\frac{W}{kg}$×3]

Zeit[h]

20

21

FIG.3

EP 0 482 469 B1

FIG.4

spez.Wärmeproduktionsrate [ W/ kg ]

Zeit [ h ]

$q_{Re}$

(a)

EP 0 482 469 B1

FIG.5

FIG.6

FIG.7